Europäisches Patentamt

European Patent Office

Office européen des brevets

(11) Publication number: **0 104 068**
**B1**

(12) **EUROPEAN PATENT SPECIFICATION**

(45) Date of publication of patent specification: **29.11.89**

(51) Int. Cl.⁴: **H 04 N 5/782, H 04 N 9/84**

(21) Application number: **83305460.4**

(22) Date of filing: **16.09.83**

(54) Colour video signal recording apparatus.

(30) Priority: **21.09.82 JP 164239/82**

(43) Date of publication of application:
**28.03.84 Bulletin 84/13**

(45) Publication of the grant of the patent:
**29.11.89 Bulletin 89/48**

(84) Designated Contracting States:
**DE GB**

(56) References cited:
**EP-A-0 102 811
DE-A-3 131 906
GB-A-2 066 613**

**PATENT ABSTRACTS OF JAPAN, vol. 2, no.
154, page 10071E78, 25th December 1978 &
JP-A-53-124 409**

**IEEE TRANSACTIONS ON CONSUMER
ELECTRONICS, vol. CE-27, no. 3, August 1981,
pages 320-328, IEEE, New York, US; K. MOHRI
et al.: "A new concept of handy video recording
camera"**

(73) Proprietor: **SONY CORPORATION
7-35 Kitashinagawa 6-Chome Shinagawa-ku
Tokyo 141 (JP)**

(72) Inventor: **Yamagiwa, Kazuo Patents Division
Sony Corporation 7-35 Kitashinagawa-6
Shinagawa-ku Tokyo (JP)**
Inventor: **Takeuchi, Kouichi Patents Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

(56) References cited:
**IEEE TRANSACTIONS ON CONSUMER
ELECTRONICS, vol. CE-27, no. 3, August 1981,
pages 331-339, IEEE, New York, US; M. MORIO
et al.: "Development of an extremely small
video taperecorder"**

**FERNSEH UND KINOTECHNIK, vol. 36, no. 5,
May 1982, pages 193,194, Berlin, DE; N.
BOLEWSKI: "Das "Chroma Trak"-
Aufzeichnungssystem"**

Courier Press, Leamington Spa, England.

## Description

This invention relates to colour video signal recording apparatus, and more particularly, but not exclusively, to recording apparatus for recording a PAL colour video signal supplied by a colour video camera.

In many forms of domestic PAL colour video signal recording apparatus, a magnetic tape is wrapped around a tape guide drum at a wrap angle, that is a circumferential angle of the drum, slightly larger than 180°. Two rotary heads which are spaced 180°+0.5 H apart on the guide drum (so as to give an offset of 0.5 H, where H is the horizontal period, in the reproduced signals) are rotated at the frame frequency and the rotary heads alternately contact the magnetic tape which runs at a fixed speed. With the standard VTR of this type, one field of a video signal is recorded in each successive oblique video track on the magnetic tape. On reproduction, these video tracks are alternately scanned by two similar rotary heads, thereby to reproduce the video signal.

VTRs for domestic use for recording CCIR colour television signals with a field frequency of 50 Hz have two rotary heads with an offset of (n+0.5)H, where n is an integer, from an angular spacing of 180°. However, VTRs for recording NTSC colour television signals have two rotary heads angularly spaced at exactly 180°. The difference is necessary for achieving so-called H-alignment while using guide drums of the same diameter to record colour television signals of both systems, and arrange the horizontal synchronizing signals in alignment on adjacent tracks in the recorded pattern on the magnetic tape. In this specification, a VTR having two heads disposed with the foregoing offset and capable of recording and reproducing CCIR colour television signals is referred to as a standard VTR.

A small and light weight VTR is not only convenient to use, but also permits integration with a television camera. An important factor affecting miniaturization is miniaturization of the tape guide drum and of the mechanical parts of the tape guide path in relation to the tape guide drum.

However, mere reduction of the diameter of the tape guide drum may cause the problem that the recording pattern does not coincide with that of a standard VTR. In the case of a VTR integrally constructed with a television camera, it will be satisfactory for the VTR merely to have a recording function, as reproduction is preferably performed by a standard VTR.

To form the same recording pattern as that of a standard VTR, a magnetic tape may be wrapped at a wrap angle larger than the conventional angle around a tape guide drum having a smaller diameter than that of a standard VTR, the magnetic tape then being scanned using one rotary head. However, to record a video signal with high density, it is necessary to form the adjacent video tracks by means of rotary heads the gaps of which extend in different directions from one another. Therefore, two rotary heads are needed successfully to record a video signal, and in this case, problems arise because of the distance between the gaps.

Moreover, for a PAL colour video signal, the phase of a colour subcarrier is inverted with respect to R—Y colour different signal, every 1H, and this phase inversion of the colour sub-carrier is preserved even in the recording pattern formed on the magnetic tape. Thus, when forming the same recording pattern as the standard VTR, as described above, this phase inversion of the colour sub-carrier has to be identical with that of a standard recorded signal.

Our European patent specification EP—A2—0 102 811 discloses a video signal recording apparatus according to the pre-characterizing part of claim 1 (EPC Article 54(3) and (4)).

According to the present invention there is provided a video signal recording apparatus having a tape guide drum around which a magnetic tape is to be wrapped, and a first and a second rotary head arranged alternately to come into contact with said magnetic tape, the extending directions of transducing gaps of said first and second heads being different from each other, and the initial times when said first and second heads respectively come into contact with said magnetic tape being synchronized with vertical sync signals of a recording signal to be supplied from a camera, thereby recording said recording signal on said magnetic tape;

the recording apparatus being such that:

when the wrap angle of said magnetic tape around said tape guide drum is θ, said wrap angle θ is selected so that:

$$\frac{360°}{\theta} \times \frac{625}{2} = M$$

or

$$\frac{360°}{\theta} \times \frac{625}{2} = M' + 0.5$$

where M and M' are integers;

and being characterized in that:

when said expression with respect to the wrap angle θ equals M, an angular distance α between the gaps of said first and second rotary heads is selected so as to cause a time difference of mT, where m is an integer and T is the time corresponding to one horizontal period, and when said expression equals M'+0.5, said angular distance α is selected so as to cause a time difference of (m+0.5)T;

said video signal being reproduced by a playback apparatus which has two further rotary heads which are displaced from a standard angular spacing of 180° such that one of them causes a time difference of (n+0.5)H in reproduction, where n is an integer and H is one horizontal period.

Embodiments of the invention can form a recording pattern which is identical to that obtained with a standard VTR, so that the PAL colour signal can be reproduced without any problem by a standard VTR. Such embodiments may also enable the image pick-up tube to perform interlaced scanning, by setting the angular distance between two rotary heads for performing slant azimuth recording to a fixed value.

The invention will now be described by way of example with reference to the accompanying drawings, throughout which like parts are referred to by like references, and in which:

Figure 1 is a schematic diagram showing an arrangement of rotary heads in an embodiment of the invention;

Figure 2 is a front view showing the structure of the rotary heads;

Figure 3A is a schematic diagram showing an arrangement of the rotary heads of a standard VTR for playback;

Figure 3B is a reference diagram for describing a preferred embodiment;

Figure 4 is a schematic diagram showing the recording pattern of an embodiment of the invention;

Figure 5 is a schematic diagram showing the standard recording pattern of a standard VTR;

Figure 6 is a block diagram showing the overall arrangement of an embodiment of the invention;

Figures 7A to 7E are time charts used to describe the operation of an embodiment when θ, the wrap angle, equals 300°, and α, the angular distance between head gaps, causes a time different of −1T, where T is the time corresponding to one horizontal period;

Figures 8A and 8B are schematic diagrams used to describe the scan by an image pick-up tube when θ equal 300° and α corresponds to 1T;

Figure 9 is a schematic diagram showing a recording pattern used to explain Figure 7;

Figures 10A to 10C and 15A are time charts used to describe the operation when θ equals 300° and α corresponds to +1T, and a schematic diagram showing a recording pattern before correction;

Figures 11A to 11C, 12A to 12C and 15B are time charts used to describe the operation when θ equal 300° and α corresponds to ±2T, and a schematic diagram showing a recording pattern before correction;

Figures 13A to 13C are time charts which are used to describe the operation when θ is approximately equal to 310° and α corresponds to −2.5T;

Figures 14A to 14C and 15C are time charts which are used to describe the operation when θ is approximately equal to 310° and α corresponds to +2.5T, and a schematic diagram showing a recording pattern before correction;

Figures 16 and 17 are block diagram of an example of a signal processor, and a frequency spectrum diagram of a recording signal;

Figures 18A and 18B are waveform diagrams used to describe the correcting operation of the signal processor of Figure 16;

Figure 19 is a block diagram of another example of a signal processor;

Figure 20 is a partial block diagram of yet another example of a signal processor; and

Figures 21A to 21D are schematic diagrams of recording patterns which are used to describe the application of embodiments of the invention.

An embodiment of the invention will now be described with reference to the drawings.

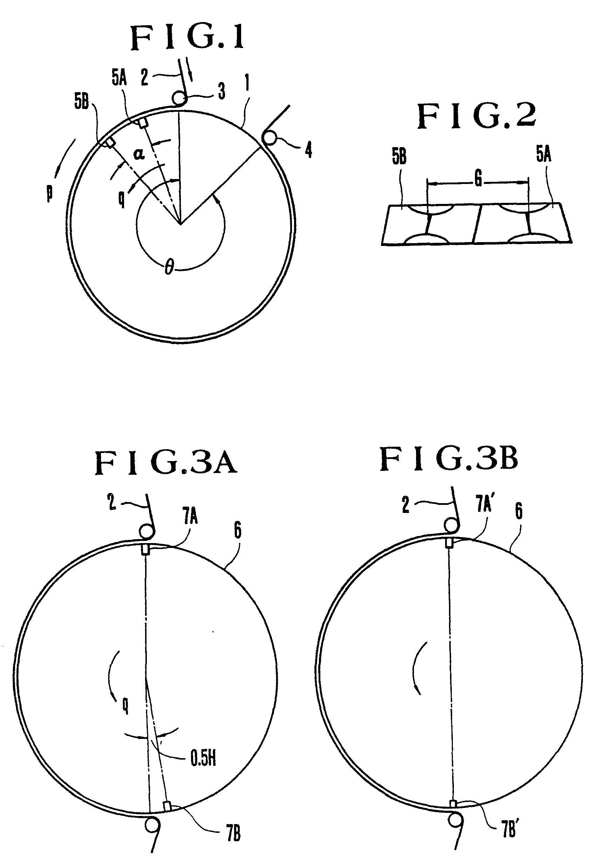

Referring first to Figure 1, a magnetic tape 2 is wrapped around the circumferential surface of a tape guide drum 1 at a wrap angle θ (270° is less than θ is less than 360°). The magnetic tape 2 is wrapped obliquely (that is on the slant) around the circumferential surface of the tape guide drum 1, and in this state, the magnetic tape 2 runs in the direction indicated by an arrow p at a fixed speed, for example 20 mm/sec. Tape guide members 3 and 4 are provided to wrap the magnetic tape 2 around the tape guide drum 1 with a predetermined relation therebetween.

Rotary heads 5A and 5B come into contact with the magnetic tape 2 wrapped around the tape guide drum 1. The rotary heads 5A and 5B are rotated counter-clockwise (in the direction indicated by an arrow q) at a normal field frequency (1/50 sec). Although not shown, the tape guide drum 1 comprises fixed upper and lower drums and a cylindrical head disc which rotates therebetween. The rotary heads 5A and 5B protrude from windows formed in this head disc.

The rotary heads 5A and 5B are constructed in such a manner that the extending directions of the respective transducer gaps are different from each other and upon reproduction, cross-talk components generated from the adjacent tracks are suppressed due to azimuth loss. The rotary heads 5A and 5B are only arranged at the locations spaced an angular distance α apart because they cannot be disposed at the same location. In this embodiment, the angular distance α is selected so that the rotary head 5B is delayed by a time period of only 1T relative to the rotary head 5A. This reference character T indicates one horizontal period modified as expressed by the following equation:

$$f_H' = \frac{360°}{θ} \cdot f_H$$

$$T = \frac{1}{f_H'}$$

where $f_H$ represents a standard horizontal scan frequency in the PAL system.

Since it is necessary to position the rotary heads 5A and 5B very closely, they are in an actual construction stuck together as shown in Figure 2, and a distance G between their gaps is set at a fixed value.

Figure 3A shows a rotary two head type VTR of the standard helical scan type to reproduce the video signal recorded by the embodiment. Thus, embodiments of the invention such as shown in Figure 1, enable the recording of a colour video signal on the magnetic tape so that it can be reproduced by a reproducing VTR as shown in Figure 3A.

The magnetic tape 2 is wrapped around the circumferential surface of a tape guide drum 6 at a wrap angle slightly larger than 180°. Two opposing rotary heads 7A and 7B are arranged in such a manner that the rotary head 7B provides an advanced time difference of 0.5H, where H is one horizontal period, relative to the angular distance of 180°, and they are arranged alternately to come into contact with the magnetic tape 2. The extending directions of the respective transducer gaps of the rotary heads 7A and 7B coincide with those of the rotary heads 5A and 5B. The rotary heads 7A and 7B are rotated at the frame frequency (1/25 sec), thereby each reproducing a colour video signal of one field, respectively. The running speed of the magnetic tape 2 is equal to the speed in the embodiment.

The reason why the rotary heads 7A and 7B are disposed with an offset angle from the angular distance of 180° is to align the positions of the recorded horizontal sync signals with the same positional line between the adjacent tracks; in other words, in order to keep the H-alignment.

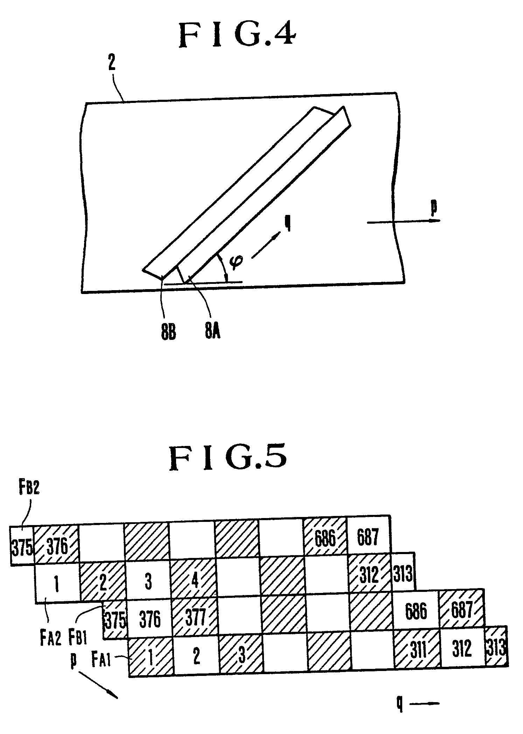

Figure 4 shows a recording pattern formed by recording a colour video signal with the embodiment. The rotary head 5A first comes into contact with the magnetic tape 2 to record a recording signal of one field in a range of the wrap angle θ, thereby forming a video track 8A. During this period of time, no recording current is supplied to the rotary head 5B. For the next one rotation, the recording current is supplied to only the rotary head 5B at the time period of the wrap angle θ, so that the recording signal of the next one field is recorded as a video track 8B. These video tracks 8A and 8B coincide with the recording patterns formed by the standard VTR of the construction shown in Figure 3A.

Figure 5 illustrates in detail video tracks of, for example, four successive fields $FA_1$, $FB_1$, $FA_2$ and $FB_2$ in the case of recording a PAL colour video signal using a standard VTR. In Figure 5, the video tracks are represented as the horizontal patterns. The vertical lines denote the positions at which the horizontal sync signals have been recorded, and the oblique lines indicate the running direction of the magnetic tape 2. The horizontal intervals indicated by hatching and the blank horizontal intervals respectively indicate the horizontal interval where the colour sub-carrier has been inverted with respect to the R—Y colour difference signal, and the horizontal interval where it has not been inverted. The numeral written in each horizontal interval denotes the number in the case where the rotary head 5B is advanced relative to the rotary head 5A by time 1T.

The lengths in the extending directions of the video tracks 8A and 8B formed by the embodiment of Figure 4 and the angle φ of the length of the track relative to the length of the magnetic tape 2 are the same as those of the standard VTR. For this purpose, the wrap angle θ is set to a fixed value, and the diameter of the tape guide drum 1 is set to a fixed value. Because the video signals of one field are recorded on the video tracks 8A and 8B, and the tape guide drum 1 having the same diameter is used both for the NTSC system and the CCIR system, it is necessary to record the video signals in the 525/2 horizontal intervals and 625/2 horizontal intervals for the video tracks 8A and 8B. Assuming that the magnetic tape 2 has been wrapped around the tape guide drum 1 at an angle of 360°, it is necessary to record an integral number of horizontal intervals in view of the signal processing and servo-controlling of the rotary heads. Therefore, the wrap angle θ satisfies the following equations:

$$\frac{360°}{\theta} \times \frac{525}{2} = N$$

$$\frac{360°}{\theta} \times \frac{625}{2} = M$$

For example, if θ is 300°, N is 315 and M is 375.

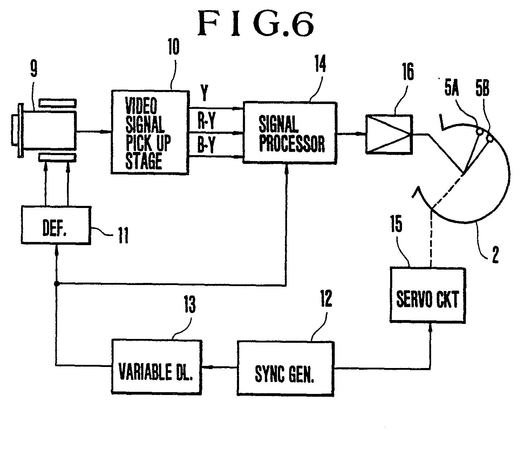

Figure 6 shows an arrangement of an embodiment of the invention. On the image pick-up surface of an image pick-up tube 9 an optical filter for colour separation, and an index electrode are provide. An output signal of the image pick-up tube 9 is supplied to a video signal pick-up stage 10, from which a luminance signal Y, a red colour difference signal R—Y, and a blue colour difference signal B—Y are supplied. The video signal pick-up stage 10 includes a low-pass filter to separate the luminance signal Y from the output of the image pick-up tube 9, and a 1H delay circuit and a phase detection circuit to derive the colour difference signals. Such a colour video camera uses, for example, a TRINICON tube (Registered Trade Mark) which is an electron index phase separation system. An electromagnetic or electrostatic deflection circuit 11 is also associated with the image pick-up tube 9.

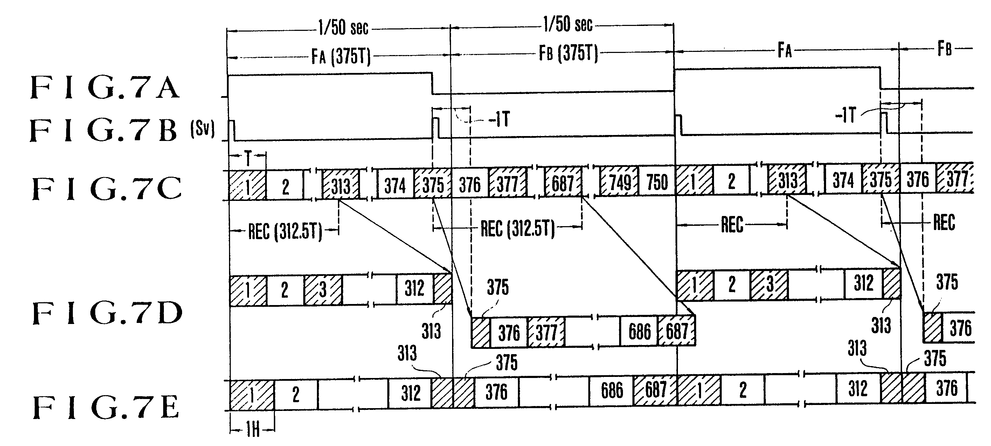

A sync signal generator 12 generates a horizontal sync signal, a vertical sync signal and a servo reference signal. In the case where θ is 300° and α corresponds to 1T, as shown in Figure 7A, a pulse signal which is at a higher level for the period of 374.5T and at a lower level for the period of 375.5T is produced by a clock oscillator and a frequency dividing counter in the sync signal generator 12. From this pulse signal, a vertical sync signal $S_V$ as shown in Figure 7B is formed. Although not shown, the horizontal sync signal having a frequency $f_H'$ is also produced by the sync signal generator 12. These vertical and horizontal sync signals are supplied through a variable delay circuit 13 to the deflection circuit 11 of the image pick-up tube 9 and to a signal processor 14.

The variable delay circuit 13 serves to correct the error of the gap distance G between the two rotary heads 5A and 5B. That is, as shown in Figure 2, the rotary heads 5A and 5B are stuck together, and therefore even if the gap distance g thereof deviates from the normal given value, this cannot be mechanically adjusted. This dimensional error is electrically corrected by the variable delay circuit 13.

A servo reference signal having a constant period of 375T is also produced by the sync signal generator 12 and supplied to a servo circuit 15. The servo circuit 15 serves to control the rotational phases of the rotary heads 5A and 5B, so that these phases become the given phases for the servo reference signal.

The signal processor 14 acts to frequency modulate the luminance signal Y and to convert the colour difference signals into the low-band conversion colour signals of the PAL system, and the recording signal is supplied therefrom. Two colour different signals R—Y and B—Y are quadrature phase modulated, and carrier signals at low-band frequencies for modulation are needed. These frequencies of the carrier signals are made different in adjacent tracks, so that cross-talk disturbance from the adjacent tracks can be cancelled. The recording signal output from the signal processor 14 is supplied to the rotary heads 5A and 5B through a recording amplifier 16, a recording switch (not shown) and a rotary transformer (not shown), so as to be recorded on the magnetic tape 2.

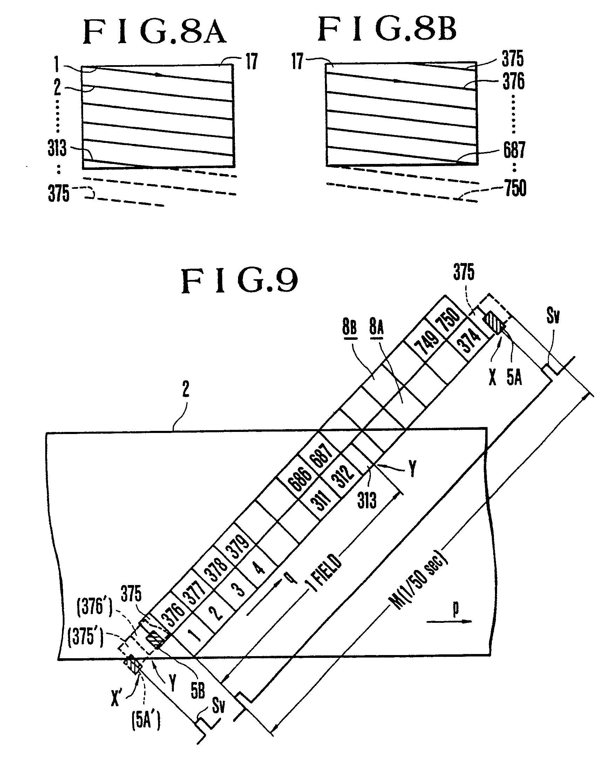

An embodiment of the invention will now be further described. Assuming that θ is 300°, an example will be described with reference to Figures 7 and 8 where the rotary head 5B is disposed at an angular distance to cause a time advancement of 1T (−1T) relative to the rotary head 5A.

As shown in Figure 7A, the period of one field is 1/50 sec and this period is 375T (T=1/$f_H'$). The vertical sync signal $S_V$ as shown in Figure 7B is produced from the pulse signal which is at a higher level in the period of 374.5T and then at a lower level in the period of 375.5T as shown in Figure 7A.

The vertical deflection of the image pick-up tube 9 is performed synchronously with this vertical sync signal $S_V$. As shown in Figure 8A, in the field $F_A$, the horizontal scanning lines from the first line to the first half of the 313rd line are in an effective screen area 17 of the image pick-up tube 9. Then, an over scanning operation occurs from the second half of the 313rd line to the first half of the 375th line.

In the next field $F_B$, as shown in Figure 8B, the subsequent horizontal scanning lines from the second half of the 375th line which starts at the upper central section of the effective screen area 17, and the following horizontal scanning lines until the 687th line are in the effective screen area 17. Thereafter, the over scanning operation occurs from the 688th line to the 750th line. Then, the scanning is executed again from the upper left end of the effective screen area 17 as shown in Figure 8A.

In practice, it is preferable to divide the over scanning region by the electron beam of the image pick-up tube between above and below the effective scanning area, because such an arrangement makes the design easier.

As described above, the interlaced scanning of 625 horizontal scanning lines is carried out. Of the output signal columns of the image pick-up tube shown in Figure 7C, the recording signals in the period from the first horizontal scanning line to 312.5T in the field $F_A$ are recorded on the magnetic tape 2 by the rotary head 5A. On the other hand, the recording signals in the period from the second half of the 375th horizontal scanning line to 312.5T in the field $F_B$ are recorded on the magnetic tape 2 by the other rotary head 5B. In this way, the complete colour video signal from the colour video camera is recorded on the magnetic tape 2.

For easy understanding, it is assumed that the magnetic tape 2 which has been recorded as described above is played back by a VTR (Figure 3B) having two rotary heads 7A and 7B which are spaced an angular distance of 180° apart and rotate at the frame frequency. The rotary head 5B is advanced by −1T relative to the rotary head 5A, so that as shown in the example of the reproduced signal of Figure 7D, the reproduced output of the other rotary head corresponding to the rotary head 5B is generated with a time dealy of only 1H. Therefore, if the reproduced outputs of the two rotary heads are simply added to obtain a continuous output, a phase jump in the horizontal sync signal would occur at the joint between them.

However, in this example, a VTR for playback (Figure 3A) is used in which the rotary head 7B is arranged so as to cause a time advancement of 0.5H relative to the angular distance of 180°. It is therefore possible to obtain a reproduced signal not having a phase jump of the horizontal sync signal, and as shown in Figure 7E.

The relationship between the recording signal columns will be further described in detail with reference to the tape pattern shown in Figure 9.

The horizontal signals of the 1st to 312.5th and the 375.5th to 687th signals in the intervals $F_A$ and $F_B$ among the signal columns of Figure 7C are actually recorded on the tape. The track 8A is scanned by the rotary head 5A and recorded, and the rotary head 5A at the position X (at the first half of the 375th horizontal line) where the track scanning corresponding to the over scanning area of the image pick-up tube has finished is located at the positon X' (rotary head 5A') of the track 8B at the point of an arrow (indicated by a dotted line). If the rotary head 5B that will be used next is located at the same mechanical position as the rotary head 5A' (the previously mentioned displacement of −1T being neglected herein), horizontal signals such as shown by (375') (376'), . . . are recorded as the recording signal columns in the track 8B. However, it is actually impossible to dispose the rotary heads 5A and 5B in the same location, and there is an angular different equivalent to, for example, one horizontal scanning period between them. Hence, the recording signal from the horizontal signal of the second half of the 375th signal is recorded by the rotary head 5B as indicated by the solid lines. This recording signal pattern is identical to that recorded by a standard VTR. Now, assuming that this recording tape is played back by a VTR having the rotary heads 7A' and 7B' shown in Figure 3B, since the change-over point of the rotary heads 7A' and 7B' is a point Y, the signal jump of 0.5 horizontal period occurs at the second half of the 375th horizontal signal. However, as described above, since the playback apparatus actually has the rotary heads 7A and 7B shown in Figure 3A, such a signal jump will not occur.

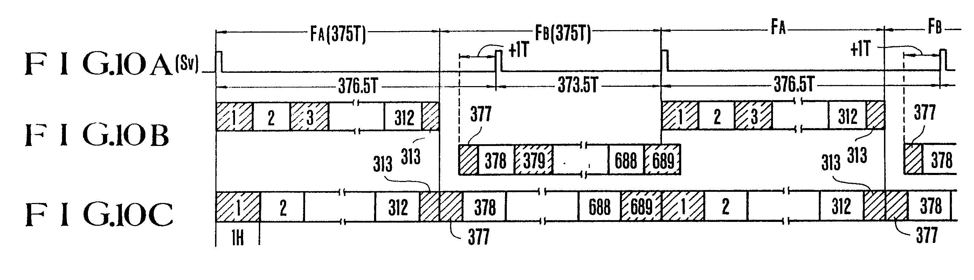

Contrary to the above case, Figure 10 indicates the operation when the rotary head 5B is disposed so as to cause a time lag of 1T (+1T) relative to the rotary head 5A. Figure 10A shows the vertical sync signal $S_V$. When the magnetic tape 2 is recorded in this case is played back by a VTR (see Figure 3B) having two rotary heads spaced at an angular distance of 180° apart, the reproduced output of the playback rotary head corresponding to the rotary head 5B has a timing that is advanced by 1T as shown in Figure 10B. However, in an actual VTR for playback, since the rotary head 7B is disposed precedingly with a time difference of 0.5H as shown in Figure 3A, it is possible to obtain the reproduced signal without the phase jump of the horizontal sync signal as shown in Figure 10C.

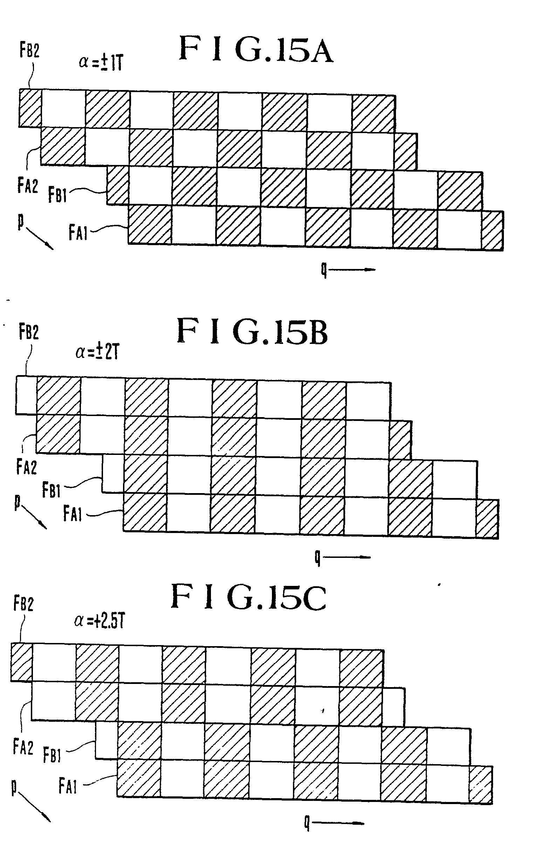

In Figure 7 and 10, the horizontal scanning lines of the hatched numbers and the other horizontal scanning lines represented by the blanks show the inversion of the colour sub-carrier of the R—Y colour difference signal. For example, in the case where the number of the horizontal scanning line is an odd number, the phase of the colour sub-carrier is inverted, and when it is an even number the phase is not inverted. Thus when the angular distance α between the rotary heads 5A and 5B is set to correspond to ±1T, the phase inverted relationship of the colour sub-carrier in the recording pattern on the magnetic tape 2 is as shown in Figure 15A.

Figure 15A shows the recording pattern which is formed in the period of four successive fields ($F_{A1}$, $F_{B1}$, $F_{A2}$, $F_{B2}$). This recording pattern does not coincide with the normal recording pattern shown in Figure 5. Namely, it will be appreciated by comparison of the recording patterns that the phases of the colour sub-carriers in the third field $F_{A2}$ and the fourth field $F_{B2}$ are opposite to those in the normal recording pattern.

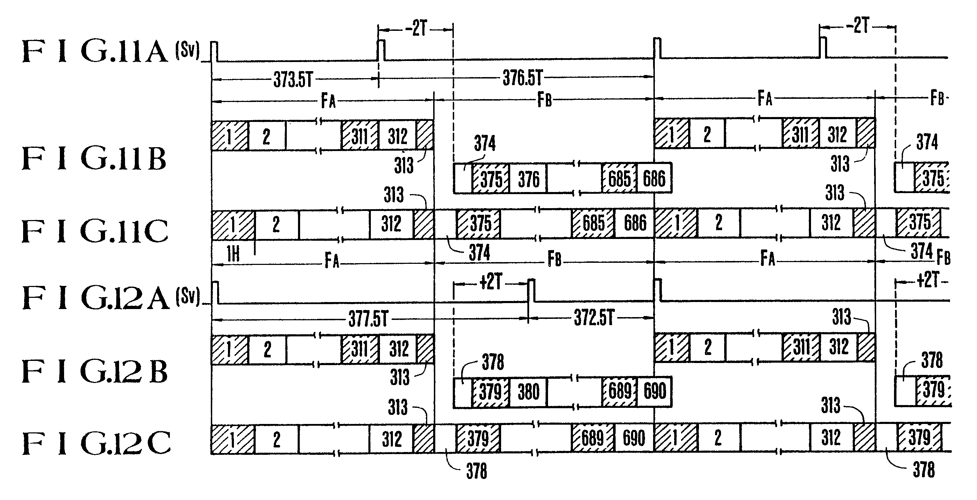

The recording operations are shown in Figures 11 and 12 where the angular distance α between the rotary heads 5A and 5B corresponds to ±2T.

Figure 11A shows the vertical sync signal $S_V$ to drive the image pick-up 9 in the case where the rotary head 5B is precedingly disposed relative to the rotary head 5A so as to cause a time difference of −2T. The colour video signals corresponding to the effective screen area 17 are alternately recorded by the rotary heads 5A and 5B synchronously with this vertical sync signal $S_V$.

Assuming that the recording tape 2 recorded in this way is played back by a VTR (refer to Figure 3B) having two rotary heads spaced at an angular distance of 180° apart, its reproduced output is as shown in Figure 11B, and the reproduced output of the rotary head corresponding to the rotary head 5B is generated with a delay time of 2T. However, for the playback VTR, since the rotary head 7B is disposed precedingly with a time difference of 0.5H relative to 180° as shown in Figure 3A, it is possible to obtain a reproduced output without the phase jump of the horizontal sync signal, as shown in Figure 11C.

In the case where the rotary head 5B is disposed at the delay location so as to cause a time difference of +2T relative to the rotary head 5A, the image pick-up tube 9 is driven by the vertical sync signal $S_V$ shown in Figure 12A, and the colour video signal corresponding to the effective screen area 17 is alternately recorded on the magnetic tape 2 by the rotary heads 5A and 5B.

Figure 12B shows the reproduced output when it was played back by a VTR having two rotary heads spaced at an angular distance of 180° apart. Figure 12C shows the reproduced signal not having a jump. As will be apparent from Figures 11 and 12, in the case where the angular distance α between the rotary heads 5A and 5B causes time differences of ±2T, the recording pattern shown in Figure 15B is formed. As will be understood by comparing the recording pattern of Figure 15B with the normal recording pattern shown in Figure 5, the phases of the colour sub-carriers in the second field $F_{B1}$ and the third field $F_{A2}$ are opposite to those in the normal recording pattern.

The above description is for the case where θ is 300°; however, it is possible to set θ to be 310.34482°. In such a case:

$$\frac{360°}{\theta} \times \frac{625}{2} = M' + 0.5 = 362 + 0.5$$

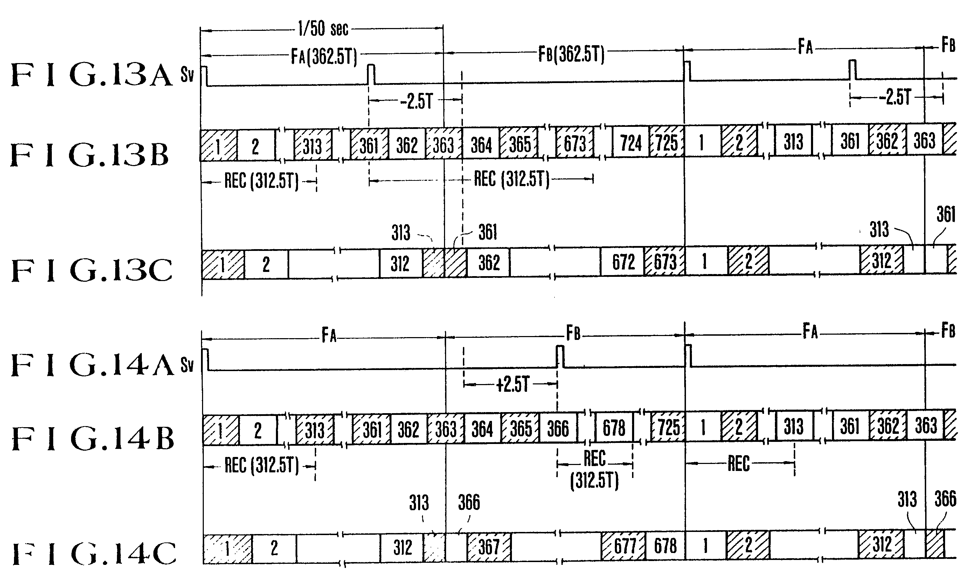

As stated above, if a fraction of 0.5 is included in the number of horizontal signals in 1/50 sec, the angular distance α between the gaps of the rotary heads 5A and 5B is selected so as to cause a time difference of (m+0.5)T. For example, the operation when m is 2 will be described with reference to Figures 13 and 14 on the assumption that the recording signal can be played back by a VTR having the rotary head 7B which is disposed so as to have an offset angle advanced by 0.5H in the rotational direction from the location where two rotary heads are spaced 180° apart, as shown in Figure 3B.

The operation will first be described with reference to Figure 13 where the rotary head 5B is precedingly disposed so as to cause a time difference of 2.5T relative to the rotary head 5A. Figure 13A shows the vertical sync signal $S_V$. The vertical sync signal $S_V$ comprises a signal genera-

ted at a period of 725T and a signal generated with a delay time of 360.5T. The image pick-up tube 9 is driven by the vertical sync signal $S_V$. The horizontal scanning lines from the first line to the first half of the 313th line scan of the effective screen area 17, and the colour video signal so produced at this time is recorded on the magnetic tape 2 by the rotary head 5A. The colour video signal obtained when the screen is scanned by the 361st and 725th horizontal scanning lines is recorded on the magnetic tape 2 by the rotary head 5B.

Figure 13B shows the number of horizontal scanning lines of this image pick-up tube and also indicates the phase inverted relationship of the colour sub-carrier of the R—Y colour difference signal. When θ is approximately equal to 310°, since the total number of horizontal scanning lines included in the fields $F_A$ and $F_B$ is an odd number (725 lines), the phase of the colour sub-carrier in the fields $F_A$ and $F_B$ and the phase of the colour sub-carrier in the next fields $F_A$ and $F_B$ are inverted. Figure 13C shows the reproduced signal upon playback of the magnetic tape 2 recorded in the manner described above. It will be appreciated from Figure 13C that the phase inverted relationship of the colour sub-carriers in the recording pattern in case of the time difference of −2.5T coincides with that in the standard recording pattern shown in Figure 5.

Next, the operation will be described where the rotary head 5B is disposed a delayed location relative to the rotary head 5A. In this case, the image pick-up tube is driven by the vertical sync signal $S_V$ shown in Figure 14A. As shown in Figure 14B, the colour video signal generated by the scanning operation by the horizontal scanning lines from the second half of the 366th line to the 678th line is recorded on the magnetic tape 2 by the rotary head 5B.

Figure 14C shows the reproduced signal upon playback of the recording tape 2 recorded in such a manner. As obvious from Figure 14C, the phase inverted relationship of the colour sub-carrier of the R—Y colour difference signal in this recording pattern is as shown in Figure 15C. It will be appreciated by comparison with the standard recording pattern shown in Figure 5 that the phase inverted relationship of the colour sub-carriers in the second field $F_{B1}$ and the fourth field $F_{B2}$ is wrong.

Another features of embodiments of the invention is that if the phase inverted relationship of the colour sub-carrier of the R—Y colour difference signal is different from that in the standard recording pattern (this case is shown in Figures 15A, 15B and 15C, respectively), the phase inverted relationship of the colour sub-carrier can be made identical with that in the standard recording pattern by electrically correcting the recorded signal.

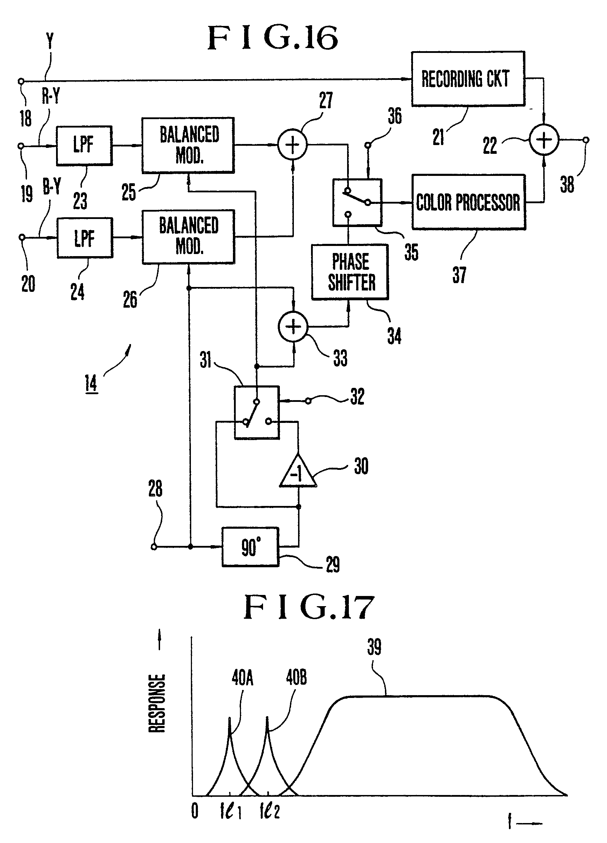

This correction of the recording signal is performed by the signal processor 14. Figure 16 shows an arrangement of an example of such a signal processor 14. The luminance signal Y to which a composite sync signal was added is supplied to an input terminal 18, and the colour difference signals R—Y and B—Y are supplied to input terminals 19 and 20, respectively. The luminance signal Y is then supplied to a recording circuit 21 for a luminance signal. The recording circuit 21 comprises a pre-emphases circuit, a clipping circuit, a clamping circuit, a frequency modulation circuit, and a high-pass filter. The recording circuit 21 supplies a modulated luminance signal which has been frequency modulated so that the sync clip level and white peak level become predetermined frequencies, respectively, and this signal is supplied to a mixer 22.

The colour difference signals R—Y and B—Y are supplied through low-pass filters 23 and 24 to balanced modulators 25 and 26, respectively. The outputs of the balanced modulators 25 and 26 are supplied to a mixer 27. A colour sub-carrier signal is supplied to a terminal 28. The frequency of this colour sub-carrier signal is represented by the following expressions:

$$f_{sc}' = (284 - 1/4)f_H'$$

or

$$f_{sc}' = (284 - 1/4) f_H' + \frac{1}{750}f_H'$$

In the above expressions,

$$\frac{1}{750}f_H'$$

is a numeric value which is applied when θ is 300°, and is added to prevent the adverse influence caused in the reproduced picture when the phases of the colour sub-carriers have the fixed relation.

The colour sub-carrier signal is supplied to the balanced modulator 26 and at the same time modulated by the colour difference signal B—Y, and then its phase is shifted by 90° by a phase shifter 29. An output of the phase shifter 29 and an output of which the phase thereof has been inverted by an inverter 30 are supplied to an input terminal of a switching circuit 31. The state of the switching circuit 31 is changed at every horizontal interval (1T) by switching pulses supplied from a terminal 32. The switching circuit 31 supplies a colour sub-carrier signal the phase of which has been inverted every 1T. This colour sub-carrier signal is supplied to the balanced modulator 25 and modulated by the colour difference signal R—Y. Two colour sub-carrier signals supplied to the balanced modulators 25 and 26 are mixed by a mixer 33, and this mixed signal is transmitted through a phase shifter 34 to produce a burst signal. This burst signal is supplied to one input terminal of a switching circuit 35. The colour difference signal which has been quadrature phase modulated is supplied to the other input terminal of the switching circuit 35. The switching circuit 35 is controlled by a switching pulse from a terminal 36, and the burst signal is added to the carrier colour signal.

The carrier colour signal including this burst signal is supplied to a colour processor 37, where it is converted into a signal at a low-band carrier frequency. The low-band carrier frequencies in adjacent tracks are made different to prevent cross-talk between the adjacent tracks. The low-band carrier frequency $f_{11}$ of the signal to be recorded in one track of two adjacent tracks is

$$\frac{351}{8} f_H',$$

and the low-band carrier frequency $f_{12}$ of the signal to be recorded in the other track is

$$\frac{353}{8} f_H'.$$

A low-band conversion colour signal output from the colour processor 37 is supplied to the mixer 22. Figure 17 shows the frequency spectrum of the recording signal at an output terminal 38 of the mixer 22.

Figure 17 shows a frequency spectrum 39 of the luminance signal which has been frequency modulated, and frequency spectra 40A and 40B of the low-band carrier colour signals to be recorded in respective adjacent tracks. As described above, there is a frequency difference of $1/4 \, f_H'$ present between the carrier frequencies $f_{11}$ and $f_{12}$. Therefore, the inherent carrier colour signal in the reproduced signal and the cross-talk from the adjacent tracks have a similar frequency difference. Thus, the cross-talk can be eliminated by a comb line filter which uses a 2H delay line and is provided on the playback side.

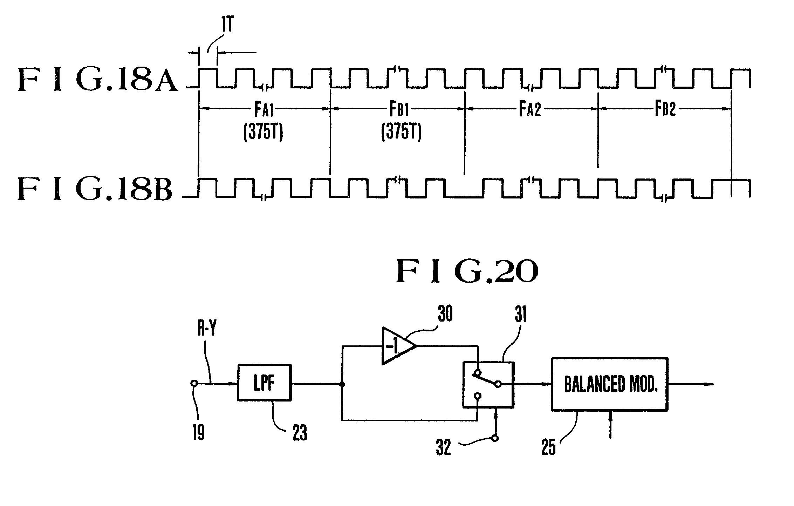

The switching pulses supplied from the terminal 32 to the switching circuit 31 are as shown in Figure 18B. In other words, the pulse signal shown in Figure 18A changes successively in the first field $F_{A1}$ to the fourth field $F_{B2}$, while the switching pulse shown in Figure 18B changes its level with the opposite polarity in the third field $F_{A2}$ and the fourth field $F_{B2}$ as compared with the pulse signal of Figure 18A. As described previously, when the angular distance $a$ between the transducer gaps is selected to correspond to $\pm 1T$ when $\theta$ is 300° and the recording pattern shown in Figure 15A can be produced, the inverted phase of the colour sub-carrier of the R—Y colour difference signal in the third and fourth fields $F_{A2}$ and $F_{B2}$ is further inverted, so that it is coincident with the phase inverted relationship in the standard recording pattern.

On the other hand, when $\theta$ is 300° and the angular distance $a$ is selected to correspond to $\pm 2T$ and the recording pattern shown in Figure 15B can be produced, the phase inverted relationship of the sub-carrier of the R—Y colour difference signal in the second and third fields $F_{B1}$ and $F_{A2}$ is further inverted relative to that shown in Figure 18A. Moreover, when $\theta$ is approximately equal to 310° and the angular distance $a$ is selected to correspond to $+2.5T$ and the recording pattern shown in Figure 15C can be produced, the phase inverted relationship of the sub-carrier of the R—Y colour difference signal in the second and fourth fields $F_{B1}$ and $F_{B2}$ is inverted.

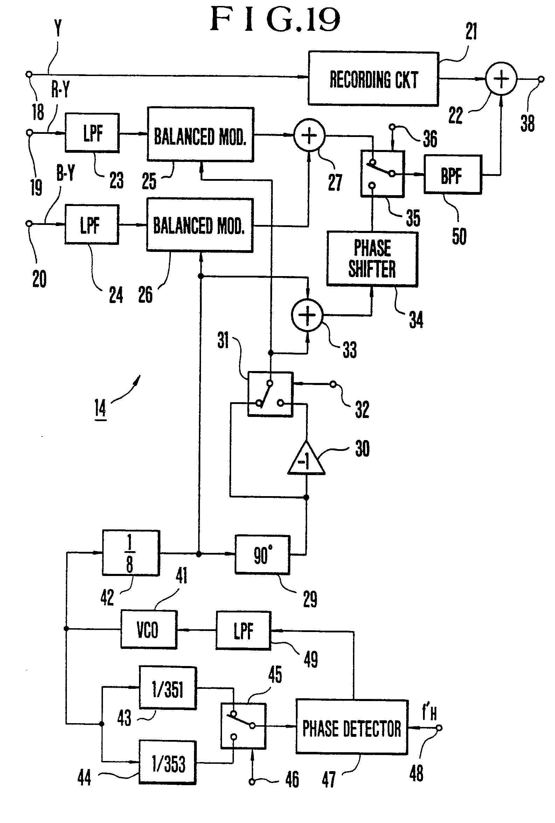

Figure 19 shows another example of the signal processor 14. In the same manner as the signal processor shown in Figure 16, the inverter 30 and the switching circuit 31 are provided, and the phase inverted relationship of the carrier signals supplied to the balanced modulator 25 is controlled so as to be identical to that in the standard recording pattern. The signal processor 14 of Figure 19 utilizes the carrier signal at low-band frequency which is balanced-modulated by the colour difference signal. That is, the balanced modulation of the PAL system and the colour process of the VTR are performed simultaneously.

The carrier signal at low-band frequency is produced by dividing an output of a voltage controlled oscillator (VCO) 41 by eight in a frequency divider 42. The output of the VCO 41 is also supplied to frequency dividers 43 and 44 and one of these outputs is selected by a switching circuit 45 and supplied to a phase comparator 47. The dividing ratio of the frequency divider 43 is 1/351, and the dividing ratio of the frequency divider 44 is 1/353. The switching circuit 45 is controlled by switching pulses at frame frequency from a terminal 46, and an output of the frequency divider 43 is selected in one field and an output of the frequency divider 44 is selected in the next field.

The horizontal sync signal (at frequency $f_H'$) from the sync signal generator 12 is supplied from a terminal 48 to the phase comparator 47. An output of this phase comparator 47 passes through a low-pass filter 49 and becomes a control voltage for the VCO 41.

This arrangement forms a phase locked loop (PLL) circuit which is stable in the case where the oscillating frequency of the VCO 41 is $351 \, f_H'$ in the field where the output of the frequency divider 43 has been selected by the switching circuit 45. The PLL circuit is also stable in the case where the oscillating frequency of the VCO 41 is $353 \, f_H'$ in the field where the output of the frequency divider 44 has been selected by the switching circuit 45. Therefore, the carrier signal generated in the output of the frequency divider 42 changes between the signals of the frequencies of $351/8 \, f_H'$ and $353/8 \, f_H'$ at every field.

This carrier signal is balanced-modulated. The burst signal and the carrier colour signal are converted into the conversion colour signal at low-band carrier frequency, and this conversion colour signal is supplied through a band pass filter 50 to the mixer 22, so that the recording signal is supplied from its output terminal 38.

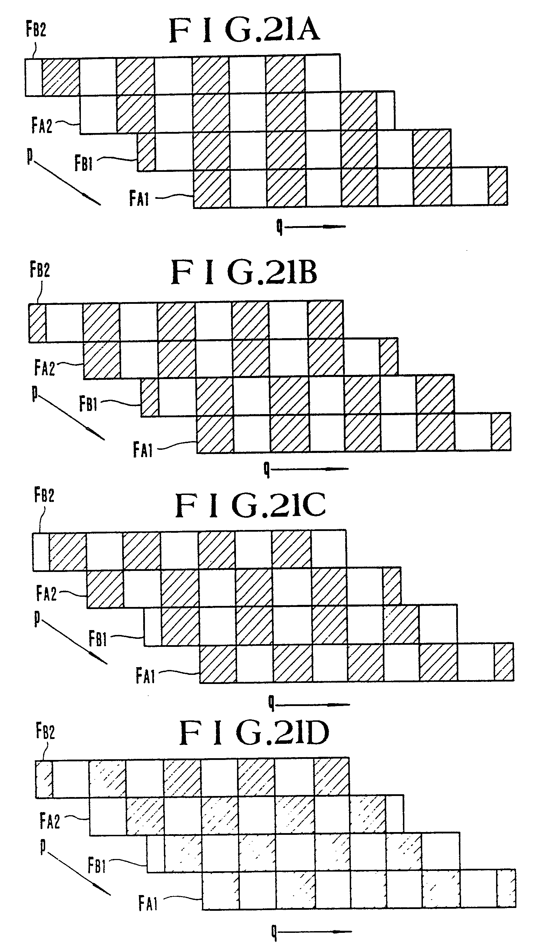

As shown in Figure 20, in another possible arrangement the inverter 30 and the switching circuit 31 are interposed between the low-pass filter 23 and the balanced modulator 25, thereby inverting the phase of the R—Y colour difference signal itself instead of the carrier signal.

Moreover, it is also possible for a colour processor for the VTR to perform the low-band conversion using the carrier signal whose phase is shifted at 90° at every 1H, so that the changing directions in the adjacent tracks are opposite.

In the foregoing description, the rotary heads 7A and 7B are displaced so as to have an offset of 0.5 H relative to the angular distance of 180. Therefore, as shown in Figure 5, in the recording pattern the end portion of the track corresponding to the field $F_A$ is spaced from the end portion of the track corresponding to the field $F_B$ by the distance corresponding to 0.5H or 1.5H and the colour signals change as shown by the oblique lines, which is the standard recording pattern. However, the invention may be applied to the case where the playback VTR has the rotary heads spaced at an angular distance of 180° and as shown in Figure 21A, the end portion of the track is spaced by the distance corresponding to 1.5H, and the recording pattern in which the changes of colour signals stand in a column between the adjacent tracks is standardized.

In the latter case, the angular distance $\alpha$ between the transducing gaps of the recording rotary heads is made different by only 0.5T relative to the value in the foregoing description. As shown in Figures 21B, 21C and 21D, respectively, the changes of colour signals may be different from the standard recording pattern. These various recording patterns occur in dependence upon the wrap angle $\theta$ of the magnetic tape 2, the angular distance $\alpha$, and the positional relationship between two rotary heads. Thus, the standard recording pattern can be formed.

Thus, in the case of the recording pattern shown in Figure 21B, the phase inverted relationships of the colour sub-carriers in the third and fourth fields $F_{A2}$ and $F_{B2}$ are reversed. In the case shown in Figure 21C, the phase inverted relationships of the colour sub-carriers in the second and third fields $F_{B1}$ and $F_{A2}$ are reversed. In the case shown in Figure 21D, the phase inverted relationships of the colour sub-carriers in the second and fourth fields $F_{B1}$ and $F_{B2}$ are reversed.

The description has been given with respect to a VTR which processes a PAL colour video signal, however, the invention can be adapted to a video camera with integral VTR which records a SECAM colour video signal.

That is to say, if the VTRs which are conventionally used have the playback rotary heads 7A and 7B as shown in Figure 3A, it is possible to construct the recording apparatus which causes no jumping in the reproduced signals using a conventional standard playback apparatus, by selecting the relationships between the head angular distance $\alpha$, the wrap angle $\theta$ and the integers M and m, etc. as described above.

In addition, a partial modification enables a recorder to be provided which can reproduce the colour signals of the SECAM system without any problem, while the line sequential relationships of the R—Y and B—Y colour difference signals in the recording pattern are identical to those in the standard VTR.

Thus with embodiments of the invention, it is possible using a small diameter tape guide drum to form a recording pattern which can be reproduced by a standard VTR without any problem. This enables miniaturization of the recording VTR. Moreover, the phase relationship of the colour sub-carrier of the R—Y colour difference signal in the recording pattern is identical to that of the standard VTR, so that the PAL colour signal can be reproduced without any problem. The image pick-up tube performs interlaced scanning by setting the angular distance between two rotary heads for performing the slant azimuth recording to be a fixed value.

## Claims

1. A video signal recording apparatus having a tape guide drum (1) around which a magnetic tape (2) is to be wrapped, and a first and a second rotary head (5A, 5B) arranged alternately to come into contact with said magnetic tape (2), the extending directions of transducing gaps of said first and second heads (5A, 5B) being different from each other, and the initial times when said first and second heads (5A, 5B) respectively come into contact with said magnetic tape (2) being synchronized with vertical sync signals of a recording signal to be supplied from a camera (9, 10), thereby recording said recording signal on said magnetic tape (2);

the recording apparatus being such that:

when the wrap angle of said magnetic tape (2) around said tape guide drum (1) is $\theta$, said wrap angle $\theta$ is selected so that:

$$\frac{360°}{\theta} \times \frac{625}{2} = M$$

or

$$\frac{360°}{\theta} \times \frac{625}{2} = M'+0.5$$

where M and M' are integers;

and being characterized in that:

when said expression with respect to the wrap angle $\theta$ equals M, an angular distance $\alpha$ between the gaps of said first and second rotary heads (5A, 5B) is selected so as to cause a time difference of mT, where m is an integer and T is the time corresponding to one horizontal period, and when said expression equals M'+0.5, said angular distance $\alpha$ is selected so as to cause a time difference of (m+0.5)T;

said video signal being reproduced by a playback apparatus which has two further rotary heads (7A, 7B) which are displaced from a standard angular spacing of 180° such that one of them causes a time difference of (n+0.5)H in reproduction, where n is an integer and H is one horizontal period.

2. A video signal recording apparatus according to claim 1 wherein said first and second rotary heads (5A, 5B) rotate once in one field period and the horizontal scan lines of substantially one field of a television signal are recorded as one track (8A, 8B) on said magnetic tape (2) in the interval during which said magnetic tape (2) has been wrapped around said tape guide drum (1).

3. A video signal recording apparatus according to claim 2 wherein an electron beam of an image pick-up tube (9) of said camera (9, 10) is horizontally deflected such that said horizontal scan lines of substantially one field are recorded as said one track (8A, 8B).

4. A video signal recording apparatus according to claim 3 wherein said first and second magnetic heads (5A, 5B) are switched substantially at every field of the television signal so as to record alternate fields, and the times when the television signal from said camera (9, 10) are supplied to said first and second magnetic heads (5A, 5B) have a phase difference corresponding to the transducer gap distances (mT,(m+0.5)T) of said first and second heads (5A, 5B).

5. A video signal recording apparatus according to claim 4 wherein the vertical deflection of the electron beam of an image pick-up tube (9) of said camera (9, 10) is performed to provide an offset relation between the adjacent fields in order to cause said phase difference.

6. A video signal recording apparatus according to claim 5 wherein circuit means associated with a vertical deflection circuit (11) is provided for adjusting said offset amount to correct the angular distance error with respect to the angular distance α between said first and second heads (5A, 5B).

7. A video signal recording apparatus according to claim 6 wherein said circuit means includes a variable delay line (13).

8. A video signal recording apparatus according to claim 3 wherein M (or M'+0.5) is set to a whole scanning region of the electron beam of the image pick-up tube (9) of said camera (9, 10) and the interval during which said magnetic tape (2) comes into contact with said tape guide drum (1) in said whole scanning region is set to an effective scanning region, and a non-contact interval corresponds to an over scanning region.

9. A video signal recording apparatus according to claim 1 wherein said recording signal is corrected to keep a predetermined phase inverted relationship of the colour sub-carrier of the R—Y colour difference signal in the recording pattern formed on said magnetic tape (2).

**Patentansprüche**

1. Videosignal-Aufzeichnungsgerät mit einer von einem Magnetband (2) umschlungenen Bandführungstrommel (1) und einem ersten und einem zweiten drehbaren Kopf (5A, 5B), die so angeordnet sind, daß sie abwechselnd mit dem Magnetband (2) in Kontakt kommen, wobei die Wandlerluftspalte des ersten und des zweiten Kopfs (5A, 5B) unterschiedlich gerichtet sind und die Anfangszeiten, in denen der erste bzw. der zweite Kopf (5A, 5B) mit dem Magnetband (2) in Kontakt kommen, mit Vertikal-Synchronisiersignalen eines von einer Kamera (9, 10) abgegebenen Aufzeichnungssignals synchronisiert sind und auf diese Weise das Aufzeichnungssignal auf dem Magnetband (2) aufgezeichnet wird,

und wobei das Aufzeichnungsgerät so ausgebildet ist, daß

der Mit θ bezeichnete Winkel, mit dem das Magnetband (2) um die Bandführungstrommel (1) geschlungen ist, so gewählt ist, daß

$$\frac{360°}{θ} \times \frac{625}{2} = M \text{ oder}$$

$$\frac{360°}{θ} \times \frac{625}{2} = M'+0,5,$$

worin M und M' ganze Zahlen sind,

dadurch gekennzeichnet,

daß dann, wenn der vorstehende Ausdruck für den Umschlingungswinkel θ gleich M ist, der Winkelabstand alpha zwischen den Luftspalten des ersten und des zweiten drehbaren Kopfes (5A, 5B) so gewählt ist, daß er eine Zeitdifferenz mT verursacht, worin m eine ganze Zahl und T die einer Zeilenperiode entsprechende Zeit ist, und dann, wenn dieser Ausdruck gleich M'+0,5 ist, der Winkelabstand alpha so gewählt ist, daß er eine Zeitdifferenz (m+0,5)T verursacht,

und daß das Videosignal von einem Wiedergabegerät wiedergegeben wird, das zwei weitere drehbare Köpfe (7A, 7B) besitzt, die gegenüber einem Standard-Winkelabstand von 180° so versetzt sind, daß einer von ihnen bei der Wiedergabe eine Zeitdifferenz der Größe (n+0,5)H verursacht, worin n eine ganze Zahl und H eine Zeilenperiode bedeuten.

2. Videosignal-Aufzeichnungsgerät nach Anspruch 1, bei dem der erste und der zweite drehbare Kopf (5A, 5B) sich in einer Halbbildperiode einmal drehen und die horizontalen Abtastzeilen eines Halbbilds eines Fernsehsignals als eine Spur (8A, 8B) auf dem Magnetband (2) in dem Intervall aufgezeichnet werden, in dem das Magnetband (2) um die Bandführungstrommel (1) geschlungen wurde.

3. Videosignal-Aufzeichnungsgerät nach Anspruch 2, bei dem ein Elektronenstrahl einer Bildaufnahmeröhre (9) der Kamera (9, 10) in der Weise horizontal abgelenkt wird, daß die horizontalen Abtastzeilen von im wesentlichen einem Halbbild als die genannte eine Spur (8A, 8B) aufgezeichnet werden.

4. Videosignal-Aufzeichnungsgerät nach Anspruch 3, bei dem der erste und der zweite Magnetkopf (5A, 5B) im wesentlichen bei bei jedem Halbbild des Fernsehsignals umgeschaltet werden, so daß sie abwechselnd Halbbilder aufzeichnen, wobei die Zeiten, in den das Fernsehsignal von der Kamera (9, 10) dem ersten und dem zweiten Magnetkopf (5A, 5B) zugeführt werden, eine Phasendifferenz haben, die den Abständen (mT, (m+0,5)T) des ersten und des zweiten Magnetkopfs (5A, 5B) entsprechen.

5. Videosignal-Aufzeichnungsgerät nach Anspruch 4, bei dem zur Erzielung der genannte Phasendifferenz die Vertikalablenkung des Elektronenstrahls der Bildaufnahmeröhre (9) der Kamera (9, 10) in der Weise so durchgeführt wird, daß zwischen den benachbarten Halbbildern ein Versatz entsteht.

6. Videosignal-Aufzeichnungsgerät nach Anspruch 5, bei dem einer Vertikalablenkschaltung zugeordnete Schaltungsmittel zur Einstellung der Größe des genannten Versatzes vorgesehen sind, um Fehler in dem Winkelabstand alpha zwischen dem ersten und dem zweiten Kopf (5A, 5B) zu korrigieren.

7. Videosignal-Aufzeichnungsgerät nach Anspruch 6, bei dem die Schaltungsmittel eine variable Verzögerungsleitung (13) enthalten.

8. Videosignal-Aufzeichnungsgerät nach Anspruch 3, bei dem M (oder M'+0,5) auf den gesamten Abtastbereich des Elektronenstrahls der Bildaufnahmeröhre (9) der Kamera (9, 10) eingestellt ist und das Intervall, in dem das Magnetband (2) mit der Bandführungstrommel (1) in Kontakt kommt, in dem gesamten Abtastbereich auf einen effektiven Abtastbereich eingestellt ist und ein Intervall, in dem keine Berührung besteht, einem Überabtastbereich entspricht.

9. Videosignal-Aufzeichnungsgerät nach Anspruch 1, bei dem das Aufzeichnungssignal so korrigiert ist, daß eine vorbestimmte phaseninvertierte Beziehung des Farbhilfsträgers des R—Y-Farbdifferenzsignals in dem auf dem Magnetband (2) gebildeten Aufzeichnungsmuster beibehalten wird.

## Revendications

1. Appareil d'enregistrement de signaux vidéo possédant un tambour de guidage de bande (1) autour duquel une bande magnétique (2) doit s'enrouler, ainsi qu'une première et une deuxième tête rotative (5A, 5B) disposées en alternance de manière à venir en contact avec ladite bande magnétique (2), les directions d'extension des entrefers de transduction desdites première et deuxième têtes (5A, 5B) étant mutuellement différentes, et les instants initiaux, où lesdites première et deuxième têtes (5A, 5B) viennent respectivement en contact avec ladite bande magnétique (2), étant synchronisés avec des signaux de synchronisation verticale d'un signal d'enregistrement devant être fourni par une caméra (9, 10), de manière à enregistrer ledit signal d'enregistrement sur la bande magnétique (2);

l'appareil d'enregistrement étant tel que:
lorsque l'angle d'enroulement guidé de ladite bande magnétique (2) autour dudit tambour de guidage de bande (1) est θ, ledit angle d'enroulement guidé θ est choisi de façon que:

$$\frac{360°}{\theta} \times \frac{625}{2} = M$$

ou

$$\frac{360°}{\theta} \times \frac{625}{2} = M'+0,5$$

où M et M' sont des entiers;
et étant caractérisé en ce que:
lorsque ladite expression en fonction de l'angle d'enroulement guidé θ est égale à M, la distance angulaire α entre les entrefers desdites première et deuxième têtes magnétiques (5A, 5B) est sélectionnée de manière à produire une différence temporelle valant mT, où m est un entier et T est la durée correspondant à une période horizontale, et, lorsque ladite expression est égale à M'+0,5, ladite distance angulaire α est sélectionnée de manière à produire une différence temporelle valant (m+0,5)T;

ledit signal vidéo étant reproduit par un appareil de reproduction qui possède deux autres têtes rotatives (7A, 7B) qui sont écartées d'une séparation angulaire normalisée de 180° de sorte que l'une d'elles produise une différence temporelle valant (n+0,5)H lors de la reproduction, où n est un entier et H est une période horizontale.

2. Appareil d'enregistrement de signaux vidéo selon la revendication 1, où lesdites première et deuxième têtes rotatives (5A, 5B) tournent une fois en une période de trame et les lignes de balayage horizontal correspondant sensiblement à une trame d'un signal de télévision sont enregistrées sous forme d'une piste unique (8A, 8B) sur ladite bande magnétique (2) dans l'intervalle de temps pendant lequel ladite bande magnétique (2) s'est enroulée autour dudit tambour de guidage de bande (1).

3. Appareil d'enregistrement de signaux vidéo selon la revendication 2, où le faisceau électronique d'un tube capteur d'image (9) de ladite caméra (9, 10) est dévié horizontalement de façon que lesdites lignes de balayage horizontal correspondant sensiblement à une trame soient enregistrées sous forme de ladite piste unique (8A, 8B).

4. Appareil d'enregistrement de signaux vidéo selon la revendication 3, où lesdites première et deuxième têtes magnétiques (5A, 5B) commutent sensiblement à chaque trame du signal de télévision de manière à enregistrer des trames alternées, et les instants où les signaux de télévision venant de ladite caméra (9, 10) sont fournis auxdites première et deuxième têtes magnétiques (5A, 5B) ont un déphasage correspondant aux distances d'entrefer de transduction (mT, (m+0,5)T) desdites première et deuxième têtes (5A, 5B).

5. Appareil d'enregistrement de signaux vidéo selon la revendication 4, où la déviation verticale du faisceau électronique du tube capteur d'image (9) de ladite caméra (9, 10) s'effectue de manière à produire une relation de décalage entre les trames adjacentes afin de produire ledit déphasage.

6. Appareil d'enregistrement de signaux vidéo selon la revendication 5, où il est prévu un circuit associé à un circuit de déviation verticale (11) afin d'ajuster ladite quantité de décalage pour corriger l'erreur de distance angulaire relative à la distance angulaire α entre lesdites première et deuxième têtes (5A, 5B).

7. Appareil d'enregistrement de signaux vidéo selon la revendication 6, où ledit circuit comporte une ligne de retard variable (13).

8. Appareil d'enregistrement de signaux vidéo selon la revendication 3, où M (ou bien M'+0,5) est fixé pour une région de balayage entière du faisceau électronique du tube capteur d'image (9) de ladite caméra (9, 10) l'intervalle pendant lequel ladite bande magnétique (2) vient en contact avec ledit tambour de guidage de bande (1) dans ladite région de balayage entière étant fixé à une région de balayage effective, tandis qu'un intervalle sans contact correspond à une région de balayage en excès.

9. Appareil d'enregistrement de signaux vidéo selon la revendication 1, où ledit signal d'enregistrement est corrigé de manière à maintenir une relation d'inversion de phase prédéterminée pour la sous-porteuse de chrominance du signal de différence de couleur R—Y dans la configuration d'enregistrement formée sur ladite bande magnétique (2).

# FIG.1

# FIG.2

# FIG.3A

# FIG.3B

# FIG.4

# FIG.5

# F I G.6

F I G.7A
F I G.7B (Sᵥ)
F I G.7C
F I G.7D
F I G.7E

EP 0 104 068 B1

# F I G.8A

# F I G.8B

# F I G.9

F I G.10A (Sv)

F I G.10B

F I G.10C

FA(375T)    FB(375T)    FA    FB

+1T    +1T

376.5T    373.5T    376.5T

1 2 3 312    377    1 2 3 312    377

313 313    378 379 688 689    313 313    378

1 2 312    378    688 689 1 2    312    378

1H    377    377

EP 0 104 068 B1

F I G.11A (Sv)

F I G.11B

F I G.11C

F I G.12A (Sv)

F I G.12B

F I G.12C

EP 0 104 068 B1

FIG.13A Sv

FIG.13B

FIG.13C

FIG.14A Sv

FIG.14B

FIG.14C

EP 0 104 068 B1

# F I G.15A

$\alpha = \pm 1T$

FB2
FA2 FB1
p
FA1

q —→

# F I G.15B

$\alpha = \pm 2T$

FB2
FA2
FB1
p
FA1

q —→

# F I G.15C

$\alpha = +2.5T$

FB2
FA2 FB1
p
FA1

q —→

# F I G.16

# F I G.17

F I G.18A

IT

FA1
(375T)

FB1
(375T)

FA2

FB2

F I G.18B

F I G.20

R-Y

LPF
23

19

30
-1

31

32

BALANCED MOD.
25

# F I G.19

# F I G. 21A

FB2

FA2

p

FB1

FA1

q⟶

# F I G. 21B

FB2

FA2

p

FB1

FA1

q⟶

# F I G. 21C

FB2

FA2

p

FB1

FA1

q⟶

# F I G. 21D

FB2

FA2

p

FB1

FA1

q⟶